Europäisches Patentamt

(19) European Patent Office

Office européen des brevets

(11) Numéro de publication : **0 045 240**

**B1**

(12) **FASCICULE DE BREVET EUROPÉEN**

(45) Date de publication du fascicule du brevet :
**01.10.86**

(21) Numéro de dépôt : **81401139.1**

(22) Date de dépôt : **20.07.81**

(51) Int. Cl.⁴ : **B 60 R 22/32**

(54) **Appareil pour le déverrouillage automatique de la fixation à la carrosserie des ceintures de sécurité pour voitures automobiles.**

(30) Priorité : **22.07.80 FR 8016184**

(43) Date de publication de la demande :
**03.02.82 Bulletin 82/05**

(45) Mention de la délivrance du brevet :
**01.10.86 Bulletin 86/40**

(84) Etats contractants désignés :
**AT BE CH DE GB IT LI LU NL SE**

(56) Documents cités :
**CH-A- 421 729**
**DE-A- 1 907 560**
**FR-A- 1 429 241**
**FR-A- 1 561 982**
**FR-A- 2 199 073**
**FR-A- 2 317 947**
**FR-A- 2 323 404**
**US-A- 3 235 930**
**REVUE AUTOMOBILE, Vol. 73, 2 mai 1978, Bern**
**PISCATOR "Un dispositif de décrochage automatique**
**pour ceintures de sécurité" page 19**

(73) Titulaire : **Rochon, René**
**44, rue de Strasbourg**
**F-55500 Ligny-en-Barrois (FR)**

(72) Inventeur : **Rochon, René**
**44, rue de Strasbourg**
**F-55500 Ligny-en-Barrois (FR)**

(74) Mandataire : **Gérardin, Robert Jean René**
**3A, avenue Georges Clémenceau Boîte Postale 2 719**
**F-51055 Reims Cedex (FR)**

Jouve, 18, rue St-Denis, 75001 Paris, France

## Description

La présente invention concerne un appareil pour le déverrouillage automatique de la fixation à la carrosserie des ceintures de sécurité pour voitures automobiles.

Les ceintures de sécurité qui équipent actuellement les véhicules automobiles sont destinées à retenir le conducteur et les passagers sur leur siège, lors d'une collision avec un autre véhicule, ou avec un élément fixe disposé le long de la route, tel que maison, arbre, etc...

Lorsque le choc se produit à vitesse assez réduite, dans le sens frontal, et que le véhicule demeure sur ses roues, le conducteur et les passagers gardent conscience et restent libres de leurs mouvements ; ce qui leur permet de dégrafer leur ceinture eux-mêmes et de sortir du véhicule, sans autre gêne qu'un léger contretemps consécutif à la manœuvre du dispositif d'ouverture de la ceinture.

Il n'en est malheureusement pas de même lorsque le choc se produit latéralement, frontalement à grande vitesse ou lorsque le véhicule s'immobilise sur le côté ou sur le dos, après avoir effectué un ou plusieurs tonneaux.

Dans ce cas, le conducteur et les passagers ont souvent perdu conscience et l'intérieur du véhicule est peu accessible aux sauveteurs ; ce qui retarde considérablement la sortie des victimes du véhicule.

La situation s'aggrave encore lorsque le véhicule s'enflamme, aussitôt après le choc ou lorsque, par suite d'une erreur de conduite ou d'une mauvaise visibilité, celui-ci tombe dans un cours d'eau, un canal, un lac ou un étang, car la panique s'empare alors des victimes qui ne parviennent plus à se libérer de leur ceinture et meurent ainsi brûlées ou noyées.

Comme on le voit, les ceintures de sécurité sont excessivement dangereuses après l'accident, lorsque celui-ci présente une certaine gravité.

Des dispositifs destinés à assurer l'ouverture automatique à retardement de la ceinture ou le déverrouillage de sa fixation à la carrosserie, existent déjà. L'un d'entre eux a été décrit dans la revue automobile, à la page 19 du n° 20 du 11.05.78. D'autres ont fait l'objet d'une protection par brevets d'inventions, parmi lesquels on peut citer les brevets français FR-A-1.429.241, FR-A-1.561.982, FR-A-2.199.073, FR-A-2.317.947 et FR-A-2.323.404, le brevet Américain US-A-3.235.930, le brevet suisse CH-A-421 729 et le brevet Allemand DE-A-1 907 560.

Tous ces dispositifs sont incorporés au système d'ouverture de la ceinture de sécurité et sont destinés à assurer l'ouverture retardée de celle-ci, à l'exception de celui qui correspond au préambule de la revendication 1 (brevet français n° 2.323.404), comprenant un corps muni d'un doigt de verrouillage rappelé élastiquement vers la position de déverrouillage d'une boucle de ceinture et retenu en position de verrouillage par un levier de verrouillage susceptible de coopérer avec la tige d'un dispositif d'actionnement à temporisation réglable, fixé au corps, et déclenché à partir d'une valeur donnée de la force exercée par la ceinture sur le corps ; un dispositif de réglage étant prévu pour permettre de modifier cette valeur de déclenchement. Le dispositif d'actionnement utilisé est un mouvement d'horlogerie, compliqué et délicat, qui risque de se détériorer avant ou au moment du choc, ou lors de l'incendie ou de l'immersion du véhicule.

On connaît déjà des appareils de déverrouillage automatique de ceinture de sécurité dont le dispositif d'actionnement est constitué d'un ensemble piston-cylindre, rempli d'un fluide, tel que de l'huile, dont le piston est percé d'orifices calibrés munis de clapets de manière à limiter l'écoulement du fluide et, par conséquent, la vitesse d'écartement des deux parties mobiles (brevet français FR-A-1.561 982 ; brevet suisse CH-A-421 729 et brevet allemand DE-A-1 907 560). Mais il s'agit de classiques amortisseurs qui doivent, pour remplir leur rôle de dispositif d'actionnement être associés à un système de levier et de ressort ou être soumis directement à l'effort de traction.

On connaît aussi, en photographie, un déclencheur à retardement constitué d'un amortisseur hydraulique dont le piston est rappelé dans un sens par un ressort et dont les extrémités de la tige dépassent à l'extérieur du cylindre pour assurer respectivement le recul du piston, par l'intermédiaire d'un bouton de manœuvre, et l'actionnement temporisé de l'obturateur des appareils de photographie.

La présente invention a pour but de remédier aux inconvénients présentés par les dispositifs d'actionnement utilisés actuellement sur les appareils de déverrouillage automatique de ceinture de sécurité. L'invention telle qu'elle est caractérisée dans la revendication 1, résout le problème consistant à obtenir le déverrouillage automatique par l'intermédiaire d'un dispositif d'actionnement à temporisation réglable, autonome, fixé au corps et déclenché à partir d'une valeur donnée de la force exercée par la ceinture sur le corps. Le dispositif d'actionnement dont il est équipé est un dispositif identique à celui utilisé en photographie ; le dispositif de réglage de la temporisation est constitué par un doigt formant butée, contre lequel prend appui la tige du dispositif d'actionnement en position armée et dont la distance par rapport au levier de verrouillage est réglable ; un dispositif démultiplicateur d'efforts est prévu pour le réarmement du doigt de verrouillage. Le dispositif permettant de régler la distance séparant l'extrémité de la tige du dispositif d'actionnement du levier de verrouillage est un excentrique, disposé à l'extrémité du doigt formant butée, dont la position est réglable par rotation du doigt. Le recul du doigt formant butée, contre lequel prend appui la tige du dispositif d'actionnement, en position armée, est obtenu par un ressort préalablement bandé, dont la libération est provoquée par la sortie d'une gorge, aménagée dans le doigt formant butée, d'un organe de verrouillage relié à un anneau de fixation par une tige rappelée vers le doigt formant butée par un ressort. Le débattement du doigt formant butée est limité par un anneau d'arrêt monté dans une gorge, juste en dessous de l'excentrique. Le dispositif démultipliant l'effort nécessaire au réarmement du doigt de verrouillage est constitué de deux palettes articulées, montées inversées l'une par rapport à l'autre et s'appliquant l'une contre l'autre de façon que la palette qui se trouve vers l'extérieur vienne s'enclencher derrière le bec du levier de verrouillage.

Les avantages obtenus par cette invention consistent essentiellement en ce que le système d'actionnement utilisé est très simple et est pratiquement insensible aux chocs, à la température et au milieu dans lequel il est plongé ; en ce que la temporisation est réglable, dans une plage importante, par simple rotation du doigt de retenue de l'axe du dispositif d'actionnement ; en ce que la force de déclenchement de l'appareil est très facile à régler de l'extérieur et en ce que l'effort à exercer pour assurer le reverrouillage de la patte de fixation de la ceinture est très faible.

Cet appareil se distingue donc par une grande simplicité, une grande robustesse et une mise en œuvre aisée.

D'autres caractéristiques et avantages apparaîtront dans la description qui va suivre, donnée à titre d'exemple non limitatif, illustrée par un dessin représentant seulement un mode de réalisation particulier.

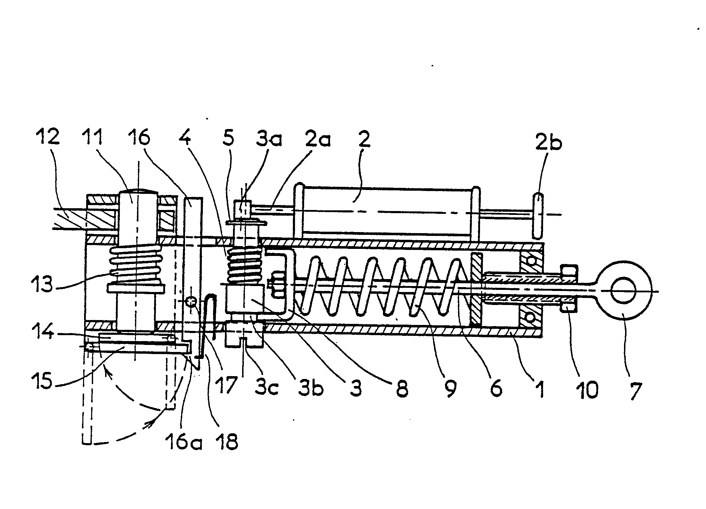

La figure unique de ce dessin représente une vue de côté de l'appareil réalisé conformément à la présente invention.

Cette figure représente un appareil pour le déverrouillage automatique de la fixation à la carrosserie des ceintures de sécurité pour voitures automobiles comprenant essentiellement un corps 1, un dispositif d'actionnement 2, muni d'une tige centrale 2a, équipée d'un bouton de réarmement 2b, un doigt de déclenchement 3, muni d'un excentrique de réglage de temporisation 3a, d'une gorge de retenue 3b et d'une fente pour tournevis 3c, sollicité vers l'extérieur par un ressort 4 et retenu par un anneau d'arrêt 5 ; une tige 6, munie à l'une de ses extrémités d'un anneau de fixation 7 et à l'autre extrémité d'un organe de verrouillage 8, rappelé en permanence vers le doigt de déclenchement 3 par un ressort 9 réglable en tension par l'intermédiaire d'une vis 10 ; un doigt de verrouillage 11 traversant la patte de fixation 12 de la ceinture de sécurité, sollicité en permanence vers l'extérieur par un ressort 13, maintenu en position enfoncée par l'intermédiaire de deux palettes articulées 14 et 15, inversées l'une par rapport à l'autre et retenues l'une contre l'autre par un levier de déverrouillage 16, muni d'un crochet de retenue 16a articulé par rapport à un axe transversal 17, rappelé en permanence vers le doigt de verrouillage 11 par un ressort 18.

Comme on le voit, en se reportant à la figure, l'appareil est retenu à la carrosserie par l'anneau 7 et à la ceinture par le doigt de verrouillage 11 qui est maintenu en position par l'intermédiaire des palettes articulées 14 et 15 et du levier de verrouillage 16. La tige centrale 2a du dispositif d'actionnement 2, préalablement armé, vient buter contre l'excentrique de réglage de temporisation 3a qui est situé à l'extrémité du doigt de déclenchement 3, lequel est retenu en position par l'organe de verrouillage 8 relié à l'anneau de fixation 7 par la tige 6.

Lorsqu'un effort, dépassant la force de tarage du ressort 9, intervient, la tige 6 coulisse vers l'extérieur en entraînant avec elle l'organe de verrouillage 8 qui, en reculant, sort de la gorge 3b et libère le doigt de déclenchement 3 qui recule sous l'effet de la tension du ressort 4 jusqu'à ce que l'anneau d'arrêt 5 vienne buter contre le corps 1. Ce recul du doigt de déclenchement 3 a pour effet de libérer la tige centrale 2a du dispositif d'actionnement 2 et de permettre à l'extrémité de celle-ci de venir prendre appui contre le levier de verrouillage 16 ; ce qui a pour effet de faire basculer le levier de verrouillage 16 autour de l'axe 17, de faire reculer le crochet 16a, de libérer les palettes articulées 14 et 15 et de permettre le recul du doigt de verrouillage 11 sous l'effet du ressort 13, ce qui libère la patte de fixation 12 de la ceinture et désolidarise celle-ci de la carrosserie.

On remarquera aussi que la temporisation, fonction de la distance qui sépare l'extrémité de la tige 2a du levier de verrouillage 16, peut être réglée par rotation du doigt de déclenchement 3 ; ce qui a pour effet de modifier la position angulaire de l'excentrique 3a contre lequel vient buter la tige 2a du dispositif d'actionnement 2.

La force de déclenchement peut être réglée en vissant ou dévissant la vis 10 ; ce qui a pour effet de bander plus ou moins le ressort 9.

Lors de l'armement ou du réarmement de l'appareil, la tige 2a du dispositif d'actionnement 2 doit être, tout d'abord, ramenée vers l'arrière, ce qui a pour effet d'emmagasiner l'énergie nécessaire au prochain déverrouillage, puis le doigt de déclenchement 3 doit être enfoncé en bandant le ressort 4 jusqu'à ce que l'organe de verrouillage 8 puisse pénétrer à nouveau dans la gorge de retenue 3b. Le levier de verrouillage 16 étant libéré, il suffit, pour assurer la fixation de la ceinture, d'introduire la patte 12 dans l'appareil de façon que l'axe de l'orifice aménagé dans celle-ci corresponde avec celui du doigt de verrouillage 11. Il suffit alors de manœuvrer successivement les palettes articulées 14 et 15 jusqu'à ce que l'extrémité libre de la palette 15 vienne s'enclencher derrière le bec 16a du levier de verrouillage 16 ; ce qui a pour effet de démultiplier l'effort nécessaire au verrouillage.

L'effort et le temps de déclenchement de l'appareil étant réglables sur une large plage, il est possible de prérégler ceux-ci de façon à laisser la ceinture de sécurité jouer son rôle aussi longtemps que nécessaire, afin d'éviter, par exemple, un déverrouillage avant l'immobilisation totale du véhicule, laquelle peut demander parfois 8 à 10 secondes ; notamment en cas de sortie de la route, de télescopages en cascade, ou de tonneaux successifs.

Dans des cas très particuliers, tels que ceux rencontrés par les cascadeurs professionnels, où la nature et l'intensité du choc sont généralement déterminés à l'avance, l'appareil pourra, sans inconvénient, être réglé de façon que le déverrouillage se produise immédiatement après le choc, afin de libérer le conducteur le plus rapidement possible.

L'appareil, objet de l'invention, peut donc être utilisé dans tous les cas où l'évacuation d'un véhicule, voire d'un aéronef, doit pouvoir s'effectuer sans entrave aussitôt après l'immobilisation qui suit un choc important.

Des applications particulièrement intéressantes existent dans les domaines automobile et aéronautique.

**Revendications**

1. Appareil pour le déverrouillage automatique de la fixation à la carrosserie d'une ceinture de sécurité comprenant un corps (1) muni d'un doigt de verrouillage (11), rappelé élastiquement vers la position de déverrouillage d'une boucle de ceinture, et retenu en position de verrouillage par un levier de verrouillage (16) susceptible de coopérer avec une tige (2a) d'un dispositif d'actionnement (2), à temporisation réglable, fixé au corps (1) et déclenché à partir d'une valeur donnée de la force exercée par la ceinture sur le corps (1), un dispositif de réglage étant prévu pour permettre de modifier cette valeur de déclenchement, caractérisé en ce que le dispositif d'actionnement (2) est du type des déclencheurs à retardement utilisant un fluide, en ce que le dispositif de réglage de la temporisation est constitué par un doigt formant butée (3), contre lequel prend appui la tige (2a) du dispositif d'actionnement en position armée, et permettant un réglage de la distance entre l'extrémité de la tige (2a) et le levier de verrouillage (16), et en ce qu'un dispositif démultiplicateur d'efforts (14 et 15) est prévu pour le réarmement du doigt de verrouillage (11).

2. Appareil pour le déverrouillage automatique de la fixation à la carrosserie des ceintures de sécurité, selon la revendication 1, caractérisé en ce que le dispositif permettant de régler la distance séparant l'extrémité de la tige (2a) du dispositif d'actionnement (2) du levier de verrouillage (16) est un excentrique (3a) disposé à l'extrémité du doigt formant butée (3).

3. Appareil pour le déverrouillage automatique de la fixation à la carrosserie des ceintures de sécurité, selon la revendication 2, caractérisé en ce que la position de l'excentrique (3a) est réglable par rotation du doigt formant butée (3).

4. Appareil pour le déverrouillage automatique de la fixation à la carrosserie des ceintures de sécurité, selon la revendication 1, caractérisé en ce que le recul du doigt formant butée (3), contre lequel prend appui la tige (2a) du dispositif d'actionnement en position armée est obtenu par un ressort, préalablement bandé, dont la libération est provoquée par la sortie d'une gorge (3b) aménagée dans le doigt formant butée (3) d'un organe de verrouillage (8), relié à un anneau de fixation (7) par une tige (6) rappelée vers le doigt formant butée (3) par un ressort (9).

5. Appareil pour le déverrouillage automatique de la fixation à la carrosserie des ceintures de sécurité, selon la revendication 4, caractérisé en ce que le débattement du doigt formant butée (3) est limité par un anneau d'arrêt (5) monté dans une gorge juste en dessous de l'excentrique (3a).

6. Appareil pour le déverrouillage automatique de la fixation à la carrosserie des ceintures de sécurité, selon la revendication 1, caractérisé en ce que le dispositif démultipliant l'effort nécessaire au réarmement du doigt de verrouillage (11), est constitué de deux palettes articulées (14 et 15) montées inversées, l'une par rapport à l'autre et s'appliquant l'une contre l'autre, de façon que la palette qui se trouve vers l'extérieur (15) vienne s'enclencher derrière le bec (16a) du levier de verrouillage (16).

**Claims**

1. Device for the automatic release of the safety-belt fastened, of an automotive vehicule equiped with a body (1) having a locking dog (11), elasticly drawn back towards the release position of a belt-buckle, and held in a release position by means of a locking lever (16) apt to work with a rod (2a) of a drive mechanismus (2), at adjustable time-delay, fastened to the body (1) and released from a given value of the exerted force by the belt on the body (1), an adjustment device being provided to permit to modify this releasing value, whererein the drive mechanismus (2) is of the design retarding releasers using a fluid wherein the adjustment device of the time-delay is constituted of a dog (3) against it leans the rod (2a) of the drive mechanismus in armed position and permitting an adjustment of the distance between the rod's extremity (2a) and the locking lever (16), and wherein that a reducing-gear device of efforts (14 and 15) is provided for the rearmament of the locking's dog (11).

2. Device for the automatic release of the safety-belt fastened, of an automotive vehicule, according to the claim 1, wherein the device permitting to adjust the distance separating the rod's extremity (2a) of the drive mechanismus (2) of the locking's lever (16) is eccentric (3a) set up at the dog's extremity (3).

3. Device for the automatic release of the safety-belt fastened, of an automotive vehicule, according to the claim 2, wherein the position of the eccentric (3a) is adjustable through the rotary motion of the dog (3).

4. Device for the automatic release of the safety-belt fastened, of an automotive vehicule, according to the claim 1, wherein the backward of the dog (3), against it leans the rod (2a) of the drive mechanismus in armed position, is achieved through a spring, previously bended, whose releasing is induced by the exit of a groove (3b) provided in the dog (3) of a locking part (8), connected to a fastening shackle (7) by a rod (6) drawn back towards the dog (3) by a spring (9).

5. Device for the automatic release of the safety-belt fastened, of an automotive vehicule, according to the claim 4, wherein the clearance of the dog (3) is limited by a shackle stop (5) held in a groove, just downwards the eccentric (3a).

6. Device for the automatic release of the safety-belt fastened, of an automative vehicule, according to the claim 1, wherein the device gearing down the effort necessary to the rearmament of the locking dog (11), is constituted of two articulated paddles (14 and 15) reversed, one regarding to the other, and applying themselves the one against the other, in order that the paddle which is outwards (15) comes into gear behind the locking lever'beak (16).

**Patentansprüche**

1. Einrichtung zur selbsttätigen Freigabe der Sicherheitgurthalterung für Kraftwagen am Wagenaufbau, aus einem Körper bestanden der mit einer Blockieren Zwinge (11) versehen ist, nach der Freigabelage einer Gurtlocke elastisch zurückgebracht, und in Blockierunglage einen Blockieren Hebel (16) behalten, mit einem Stange (2a) einer Bewegungsvorrichtung (2), zum stellbares Temporisieren am Körper befestigt (1), geeignet zu arbeiten, und von einer gegebenen Angabe der durch den Gurt auf dem Körper ausgeubten Kraft, in gang gebracht, eine regulierungsvorrichtung ist vorgesehen um diese Kraft auslösung zu modifizieren, wovon ist die Bewegungseinrichtung (2), aus dem Verspätungauflöser Typus benutzend ein Fluidum, wovon die regulierungsvorrichtung des Temporisierens mit einem Anschlag (3) vorgesehen ist ; gegen diese Vorrichtung ist der Stange (2a) der Bewegungsvorrichtung, angeleht, in ganglage zu bringen zu sein nachdem er, zwischen den Endpunkt des Stanges (2a) und das Hebelblockieren (16), die entfernung zu regulieren erlaubt, und wovon eine Vorrichtung für Gewalt umsetzer (14 und 15) für die wieder Einschaltung der Blockierenzwinge (11) vorgesehen ist.

2. Einrichtung zur selbsttätigen Freigabe der Sicherheitgurthalterung für Kraftwagen am Wagenaufbau, nach Patentanspruch 1, wovon die Vorrichtung die sie entfernung zwischen den Endpunk des Stanges (2a) der Bewegungsvorrichtung (2) des Blockierenhebels, zu regulieren erlaubt, einen Exzenter (3a) der auf dem Endpunk des Anschlags hingelegt ist (3).

3. Einrichtung zur selbsttätigen Freigabe der Sicherheitgurthalterung für Kraftwagen am Wagenaufbau nach Patentanspruch 2, wovon die Exzenterlage (3a) durch den Anschlag Achsendrehung stellerbare ist (3).

4. Einrichtung zur selbsttätigen Freigabe der Sicherheithalterung für Kraftwagen am Wagenaufbau, nach Anspruch 1, wovon der Anschlag Rückgang gegen welchen der Stange (2a) der Bewegungvorrichtung angelehnt ist, in einschaltenlage, ist vermittelst eines Feders, im voraus gespannt, deren Freigabe durch den Ausgang einer Rille (3b) bewirkt ist ; Diese Rille ist im Anschlag (3) eines Blockierenbestandteils eingerich (8), mit einem Fixierenring (7) durch (6) einen Stange nach dem Anschlag (3) durch einen Feder (9) zurückgeführt.

5. Einrichtung zur selbsttätigen Freigabe der Sicherheitgurthalterung für Kraftwagen am Wagenaufbau, nach Anspruch 4, wovon die Bewegung des Anschlags (3) ist durch einen Sperr-ring (5) limitiert und in einer Rille unter dem Exzenter (3a) eingerichet.

6. Einrichtung zur selbsttätigen Freigabe der Sicherheitgurthalterung für Kraftwagen am Wagenaufbau, nach Anspruch 1, wovon die Vorrichtung für Anstrengungenumsetzer für wieder Einschalten des Blockierenanschlag (11) notwendig ist, und mit zwei gliederpaletten (14 und 15) die eine in Beziehung auf die andere umgekehrt einsgestellt, damit die Palette die sich nach aussen hin-befindet (15), hinter dem Ende des Blockierenhebels in fühlung nimmt (16).